# EUROPÄISCHE PATENTSCHRIFT

(11) **EP 0 832 020 B1**
(45) Veröffentlichungstag und Bekanntmachung des Hinweises auf die Patenterteilung: **14.11.2001**
(21) Anmeldenummer: 96913504.5
(22) Anmeldetag: 16.04.1996
(51) Int. Cl.: B60T 13/567

(54) **UNTERDRUCKBREMSKRAFTVERSTÄRKER FÜR KRAFTFAHRZEUGE**
VACUUM SERVO BRAKE FOR MOTOR VEHICLES
SERVOFREIN A DEPRESSION POUR VEHICULES A MOTEUR

(30) Priorität: 24.06.1995 DE 19523021
(43) Veröffentlichungstag der Anmeldung: 01.04.1998
(73) Patentinhaber: Continental Teves AG & Co. oHG, 60488 Frankfurt (DE)
(72) Erfinder: SCHONLAU, Jürgen, D-65396 Walluf (DE); GRAICHEN, Kai-Michael, D-63225 Langen (DE); SAALBACH, Kurt, D-64546 Mörfelden-Walldorf (DE); WAGNER, Wilfried, D-35625 Hüttenberg (DE)
(86) Internationale Anmeldenummer: EP9601590
(87) Internationale Veröffentlichungsnummer: WO9701470

(56) Entgegenhaltungen:
- DE-A- 2 845 794
- DE-A- 4 204 419
- FR-A- 2 432 412

## Beschreibung

Die Erfindung betrifft einen Unterdruckbremskraftverstärker für Kraftfahrzeuge mit einem Verstärkergehäuse, das zwei einander gegenüberliegende Gehäusehälften aufweist, mit mindestens einer beweglichen Wand, die den Verstärkergehäuse-Innenraum unterteilt, sowie mit zwei Kraftübertragungsbolzen, die sich parallel zur Längsachse des Unterdruckbremskraftverstärkers von einer Gehäusehälfte zu der auf der entgegengesetzten Seite der beweglichen Wand gelegenen Gehäusehälfte erstrecken, gegenüber der beweglichen Wand abgedichtet sind und an deren Enden Befestigungselemente für eine Karosseriewand bzw. einen dem Unterdruckbremskraftverstärker nachgeschalteten Hauptbremszylinder ausgebildet sind.

Ein derartiger Unterdruckbremskraftverstärker ist aus der deutschen Patentschrift DE 28 45 794 bekannt. Weniger vorteilhaft ist bei dem vorbekannten Unterdruckbremskraft-verstärker sein ungünstiges Deformationsverhalten bei Unfällen, die zu Verformungen des Kraftfahrzeug-Vorderteiles führen, anzusehen. Ursache hierfür sind die die Steifigkeit des Verstärkergehäuses erhöhenden Kraftübertragungsbolzen, die einen verhältnismäßig großen Durchmesser aufweisen und die bei einem Unfall einen zu großen Widerstand gegen eine Verformung darbieten.

Der vorliegenden Erfindung liegt daher die Aufgabe zugrunde, bei einem Unterdruckbremskraftverstärker der eingangs genannten Gattung Maßnahmen vorzuschlagen, die eine erhebliche Verbesserung seines Deformationsverhaltens bei Unfällen ermöglichen.

Eine erste Lösung dieser Aufgabe besteht darin, daß die Kraftübertragungsbolzen mindestens eine Sollbruchstelle aufweisen. Vorteilhafte Weiterbildungen der ersten Lösung sind in den Unteransprüchen 2 bis 10 beschrieben.

Eine zweite Lösung der der Erfindung zugrundeliegenden Aufgabe besteht darin, daß die Kraftübertragungsbolzen mindestens einen Abschnitt kleineren Querschnitts aufweisen wobei der Abschnitt kleineren Querschnitts gegenüber der Achse des Kraftübertragungsbolzens radial versetzt ausgebildet ist. Vorteilhafte Weiterbildungen der zweiten Lösung sind in den Unteransprüchen 12 bis 15 aufgeführt.

Eine dritte Lösung der der Erfindung zugrundeliegenden Aufgaben besteht schließlich darin, daß die Kraftübertragungsbolzen zweiteilig ausgebildet sind und aus je zwei teleskopartig ineinander geführten Teilen bestehen, zwischen denen eine sowohl Druck- als auch Zugkräfte übertragende Verbindung vorgesehen ist, die durch Einwirkung einer einen vorbestimmbaren Wert überschreitenden Druckkraft lösbar ist. Vorteilhafte Weiterbildungen der dritten Lösung sind in den Unteransprüchen 17 bis 33 beschrieben.

Weitere Merkmale und Vorteile der Erfindung gehen aus der vorliegenden Beschreibung von fünf Ausführungsbeispielen anhand der beiliegenden Zeichnung hervor. In der Zeichnung zeigt:
- Fig. 1: eine erste Ausführung des erfindungsgemäßen Unterdruckbremskraftverstärkers;
- Fig. 2 bis Fig. 5 Fig. 7: eine zweite, eine dritte, eine vierte und eine fünfte Ausführung des Erfindungsgegenstandes, und
- Fig. 6: den Entriegelungsvorgang bei dem in Fig. 5 zwischen den beiden Teilen des Kraftübertragungsbolzen wirkenden elektromechanischen Verriegelungsmechanismus.

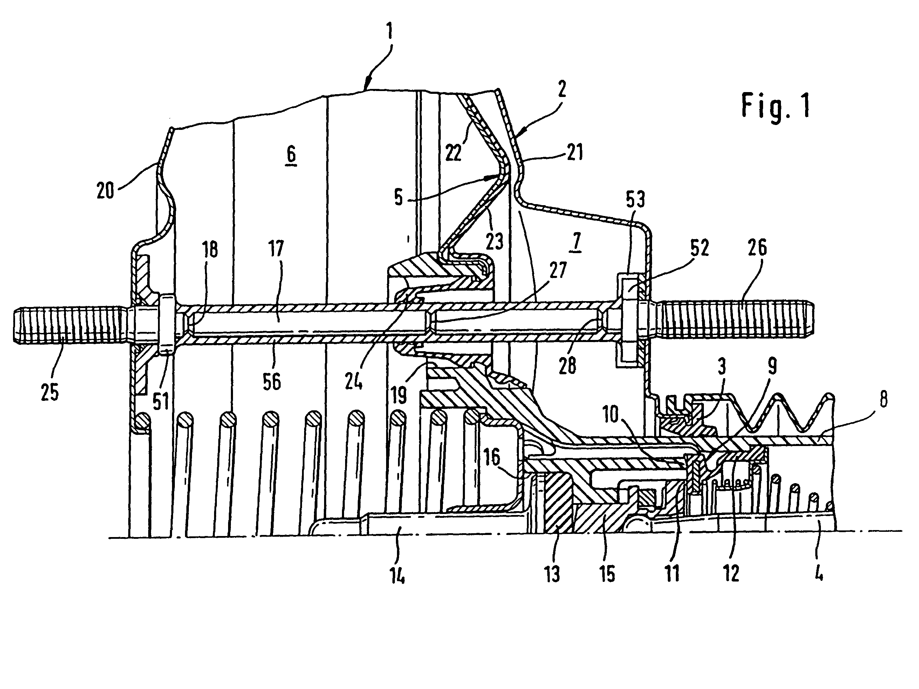

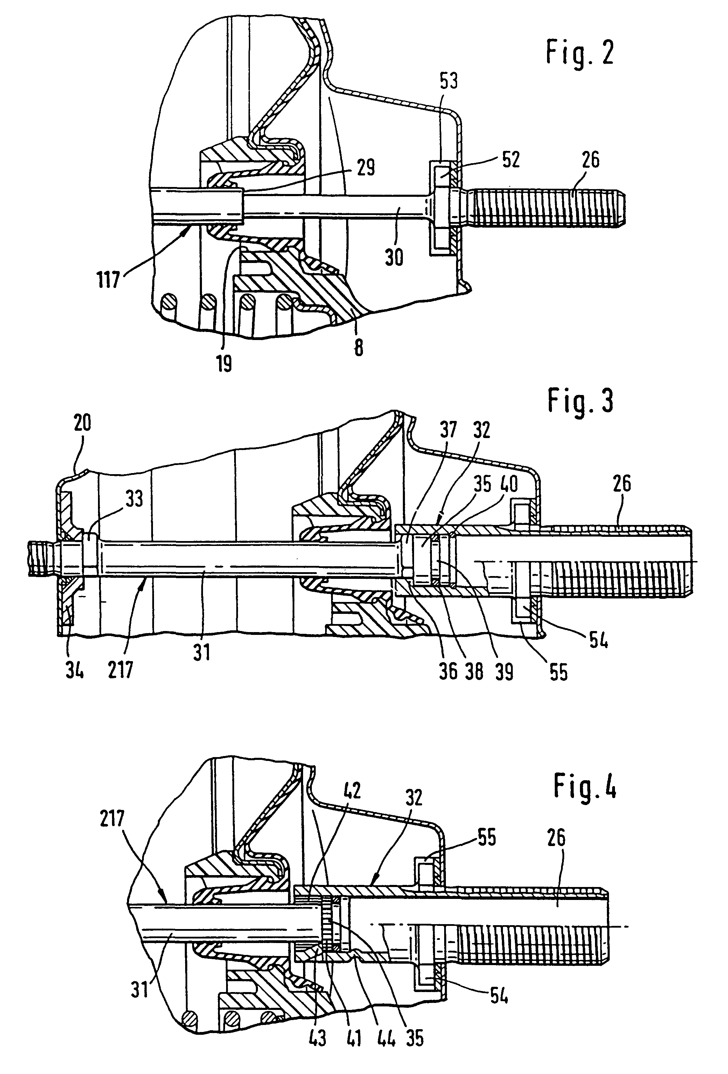

Der in der Zeichnung gezeigte erfindungsgemäße Unterdruckbremskraftverstärker 1 weist ein durch zwei untereinander verbundene Gehäusehälften 20,21 gebildetes Verstärkergehäuse 2 auf, dessen insbesondere in Fig. 1 und 2 links dargestellte Gehäusehälfte 20 einen nicht gezeigten Hauptbremszylinder trägt, während die rechts dargestellte Gehäusehälfte 21 an einer ebenso nicht gezeigten Karosseriewand eines Kraftfahrzeuges befestigt ist. In einer nicht näher bezeichneten zylindrisch gestalteten Verlängerung der rechten Gehäusehälfte 21 ist in einem Gleitdichtring 3 ein Steuergehäuse 8 verschiebbar geführt, in dem ein Steuerventil 9 angeordnet ist, das mittels eines mit einem nicht gezeigten Bremspedal gekoppelten Eingangsgliedes 4 betätigbar ist. An seinem dem Eingangsglied 4 abgewandten Ende trägt das Steuergehäuse 8 eine durch einen Membranteller 22 sowie eine daran anliegende Rollmembran 23 gebildete bewegliche Wand 5, die das Innere des Bremskraftverstärkergehäuses 2 in eine evakuierbare Unterdruckkammer 6 sowie eine Arbeitskammer 7 unterteilt, wobei das Steuerventil 9 eine Verbindung zwischen der Arbeitskammer 7 und der Unterdruckkammer 6 oder der Atmosphäre ermöglicht. Das Steuerventil 9 ist dabei vorzugsweise durch zwei koaxial zueinander angeordnete ring-förmige Dichtsitze 10,11 gebildet, die mit einem rotationssymmetrischen elastischen Ventilkörper 12, beispielsweise einem Tellerventil, zusammenwirken bzw. in Lösestellung des Unterdruckbremskraftverstärkers 1 daran anliegen. Der erste Dichtsitz 10, dessen Öffnen eine Verbindung der beiden Kammern 6,7 miteinander ermöglicht, ist dabei im Steuergehäuse 8 ausgebildet. Der zweite Dichtsitz 11, dessen Öffnen eine Belüftung der Arbeitskammer 7 ermöglicht, ist an einem im Steuergehäuse 8 geführten, mit dem Eingangsglied 4 in kraftübertragender Verbindung stehenden Ventilkolben 15 ausgebildet. Der Ventilkolben 15 steht in kraftübertragender Verbindung mit einer in einer zylindrischen Ausnehmung 16 des Steuergehäuses 8 angeordneten gummielastischen Reaktionsscheibe 13, die eine Übertragung sowohl der am Eingangsglied 4 eingeleiteten Betätigungskraft als auch der von der beweglichen Wand 5 aufgebrachten Verstärkungskraft auf ein Ausgangsglied 14 ermöglicht, das mit einem nicht gezeigten Hauptbremszylinderkolben zusammenwirkt.

Innerhalb des Verstärkergehäuses 2 sind dabei vorzugsweise zwei stabförmige Kraftübertragungsbolzen vorgesehen, die parallel zur Bremskraftverstärker-Längsachse angeordnet sind und von denen einer gezeigt und mit dem Bezugszeichen 17 versehen ist. Das die bewegliche Wand 5 tragende Steuerge-häuse 8 ist auf diesen Verbindungsbolzen 17,- verschiebbar geführt und kann sich daher im Betrieb ungehindert axial bewegen. Die Abdichtung der Kraftübertragungsbolzen 17,- in im Steuerge-häuse 8 ausgebildeten Durchtrittsöffnungen 19,-erfolgt dabei vorzugsweise mittels mit der Rollmembran 23 einteilig ausge-bildeter Gleitdichtungen, von denen die dem Kraftüber-tragungsbolzen 17 zugeordnete gezeigt und mit dem Bezugszeichen 24 versehen ist.

Um den vorhin erwähnten Hauptbremszylinder an der in Fig. 1 links gezeigten Gehäusehälfte 20 bzw. den Unterdruckbremskraftverstärker 1 an der Karosserie-Spritzwand zu befestigen, sind den beiden Gehäusehälften 20,21 Befestigungselemente 25,26 zugeordnet, die an den Enden der Kraftübertragungsbolzen 17,- ausgebildet sind.

Um sicherzustellen, daß bei einem zu Deformationen des Fahrzeug-Vorderteiles führenden Unfall eine definierte Verformung des Verstärkergehäuses 2 stattfindet, sind die Kraftübertragungsbolzen 17,- mit drei Radialnuten bzw. Kerben 18,27,28 versehen. Während die Nuten bzw. Kerben 18 und 28 im Bereich der Befestigungselemente 25,26 ausgebildet sind, befindet sich die dritte Nut bzw. Kerbe 27 im Bereich der im Steuergehäuse 8 vorgesehenen Durchtrittsöffnungen 19, durch die sich der Kraftübertragungsbolzen 17 hindurch erstreckt und die die vorhin erwähnte Gleitdichtung 24 aufnimmt. Die Nuten bzw. Kerben 18,27,28, deren Einfluß bei der Übertragung von Kräften dem Fachmann bekannt ist, können dabei vorzugsweise im Querschnitt drei-, viereckförmig oder halbkreisförmig ausge-bildet sein, wobei selbstverständlich auch andere Querschnittsformen denkbar sind. Die Kraftüber-tragungsbolzen 17,- können auch vorzugsweise mit einer gleitfähigen Kunststoffschicht 56 dicht umspritzt sein.

Eine andere Möglichkeit, das gewünschte Deformationsverhalten des Bremskraftverstärkers zu erreichen, besteht darin, daß in den Endbereichen der Kraftübertragungsbolzen zwei gleichseitig angeordnete Einfräsungen vorgesehen sind, während eine weitere Einfräsung, vorzugsweise um 180° versetzt, im Bereich zwischen den beiden erstgenannten ausgebildet ist. Dabei ist es besonders vorteilhaft, wenn die Tiefe der Einfräsungen größer ist als die Hälfte des Durchmessers der Kraftüber-tragungsbolzen. Um die die bewegliche Wand gegenüber den Kraftübertragungsbolzen abdichtenden Dichtung vor Beschädigungen im Bereich der Einfräsungen zu schützen ist es sinnvoll, die Kraftübertragungsbolzen mit einer Ummantelung, beispielsweise einem Kunststoffrohr, zu versehen.

Die Unstetigkeit im Kraftlinienverlauf kann z.B. auch mit Absätzen erreicht werden. Bei der in Fig. 2 gezeigten Ausführung weist der lediglich teilweise gezeigte Kraft-übertragungsbolzen 117 im Bereich der Durchtrittsöffnung 19 des Steuergehäuses 8 einen radialen Absatz 29 auf, an den ein Abschnitt 30 kleineren Querschnitts anschließt, an dessen Ende das der Karosserie-Spritzwand zugeordnete Befestigungselement 26 ausgebildet ist. Ein zweiter, nicht gezeigter Abschnitt kleineren Querschnitt kann selbstverständlich an dem dem nicht gezeigten Hauptbremszylinder angeordneten Ende des Kraftübertragungsbolzens 117 vorgesehen sein, wobei auch ein dazwischen liegender Abschnitt reduzierten Querschnitts durchaus denkbar ist. Die erwähnten Abschnitte können gegenüber der Achse des Kraftübertragungsbolzens 117 auch radial versetzt, also außerhalb der Achse liegend, ausgebildet sein. Um die aufgrund der auf das Verstärkergehäuse 2 einwirkenden pneumatischen Druckdifferenz auftretenden Druckkräfte in die Kraftübertragungsbolzen 17,117 einzuleiten weisen diese im Bereich der Befestigungselemente 25,26 radiale Erweiterungen 51,52 auf, die an den zugordneten Gehäusehälften 20,21 von innen an-liegen. Die in der Zeichnung rechts gezeigte Erweiterung 52 wirkt mit einem blechlaschenförmigen Flansch 53 im Sinne einer Verdrehsicherung des Kraftübertragungsbolzens 17,117 im Verstärkergehäuse 2 zusammen.

Bei der in Fig. 3 dargestellten Ausführungsvariante der Erfindung ist der Kraftübertragungsbolzen 217 zweiteilig ausgeführt und besteht aus einem sich in der Unterdruckkammer 6 axial erstreckenden, vorzugsweise zylindrischen ersten Teil 31 sowie einem zweiten Teil 32, der hülsenförmig ausgebildet ist und das der Karosseriewand zugewandte Ende des ersten Teiles 31 teleskopartig aufnimmt.

Um beim Betrieb des Bremskraftverstärkers auftretende Druckkräfte zu übertragen, ist der erste Teil 31 an seinem dem Hauptzylinder zugeordneten Ende mit einem Abschnitt größeren Durchmessers bzw. einem Polygonprofil 33 versehen, an dem eine an der in der Zeichnung links dargestellten Gehäusehälfte 20 anliegende Versteifungsscheibe 34 axial abgestützt ist. An dem in den zweiten Teil 32 hineinragenden Ende weist der erste Teil 31 einen dem vorhin genannten Zweck dienenden radialen Bund 35 auf, der mit einer am zweiten Teil 32 ausgebildeten radialen Stufe 36 zusammenwirkt. Der Verdrehsicherung des ersten Teils 31 gegenüber dem zweiten Teil 32 dient ein zweites Polygonprofil 37, während beide Teile 31, 32 mittels eines Dichtrings 38 gegeneinander abgedichtet sind, der in einer im Bund 35 ausgebildeten Umlaufnut 39 angeordnet ist.

Um die Übertragung von unterhalb des Aussteuerpunktes des Bremskraftverstärkers auftretenden Druckkräften über den Kraftübertragungsbolzen 217 zu ermöglichen, ist im zweiten Teil 32 ein Sprengring 40 vorgesehen, an dem das Ende des ersten Teils 31 axial abgestützt ist.

Durch Wirkung einer durch einen Unfall bedingten axialen Kraftkomponenten auf den ersten Teil 31 schiebt sich dieser in den zweiten Teil 32 hinein, nachdem der Sprengring 40 aus seiner im zweiten Teil 32 vorgesehenen Nut geschoben wurde. Die Anordnung des Sprengrings 40 im zweiten Teil muß so ausgelegt werden, daß er die vorhin genannten Druckkräfte übertragen kann und erst knapp oberhalb dieser Kräfte aus seiner Nut schlüpft.

Bei der in Fig. 4 gezeigten Ausführungsvariante erfolgt die Verdrehsicherung des ersten (31) gegenüber dem zweiten Teil 32 mittels einer am Bund 35 ausgebildeten Rändelung 41 sowie einer innerhalb des zweiten Teiles 32 vorgesehenen Innenrändelung 42. Der Übertragung der vorhin erwähnten Zugkräfte auf den zweiten Teil 32 dient mindestens eine mit dem Bund 35 zusammenwirkende Einscherung 43, während die Druckkräfte von einer oder mehreren gleichmäßig am Umfang des zweiten Teiles 32 angebrachten Eindrückungen übernommen werden. Der Verdrehsicherung des zweiten Teiles 32 gegenüber dem Verstärkergehäuse 2 bzw. seiner dem zweiten Teil 32 zugeordneten Gehäusehälfte 21 dient eine am zweiten Teil 32 ausgebildete radiale Erweiterung 54, die ähnlich wie bei den in Fig. 1 und 2 gezeigten Ausführungen mit einem an der Innenseite der Gehäusehälfte 21 angebrachten blechlaschenförmigen Flansch 55 zusammenwirkt.

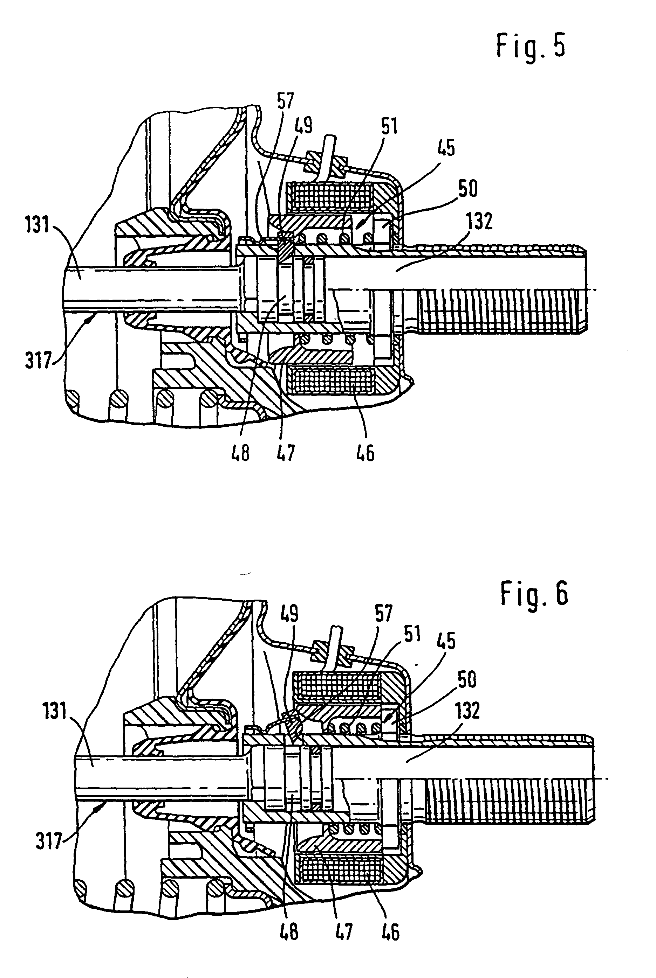

In den Fig. 5 und 6 ist eine vierte Variante des Erfindungsgegenstandes dargestellt, bei der zwischen den beiden Teilen 131,132 des Kraftübertragungsbolzens 317 ein elektromechanischer Verriegelungsmechanismus vorgesehen ist, der mit dem Bezugszeichen 45 versehen ist. Der Verriegelungsmechanismus 45, der der Übertragung der vorhin erwähnten Druckkräfte dient, sorgt im stromlosen Zustand für einen formschlüssigen Eingriff zwischen den beiden Teilen 131,132 des Kraftübertragungsbolzens 317 und besteht vorzugsweise aus einem Elektromagneten 46,47 sowie einer in eine Radialnut 48 des ersten Teiles 131 hineingreifende Sperrklinke 49, die sich radial durch eine im zweiten Teil 132 ausgebildete Ausnehmung 57 erstreckt und die beiden Teile 131,132 im Eingriff hält. Eine zwischen einem am zweiten Teil 132 ausgebildeten radialen Kragen 50 und dem rohrförmigen Anker 47 des Elektromagneten 46 angeordnete Druckfeder 51 spannt den Anker 47 so vor, daß er axial an der Sperrklinke 49 anliegt und diese radial umgreift, so daß eine formschlüssige Verbindung zwischen den beiden Teilen 131,132 realisiert wird. Bei einem Unfall wird ein nicht gezeigter Crash-Sensor, beispielsweise ein Airbag-Sensor, aktiviert, der ein Bestromen der Elektromagnetspule 46 bewirkt. Dadurch wird der Anker 47 des Elektromagneten 46,47 in der Zeichnung gegen die Wirkung der Druckfeder 51 nach rechts verschoben und gibt somit die sonst radial nach außen vorgespannte Sperrklinke 49 frei, so daß die formschlüssige Verbindung zwischen den beiden Teilen 131,132 gelöst wird und der erste (131) in den zweiten Teil 132 hineingeschoben werden kann.

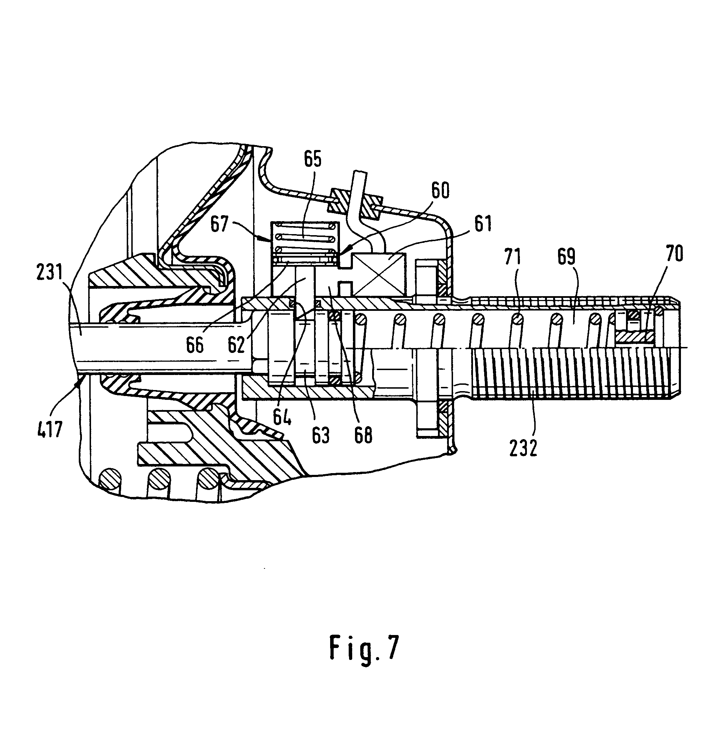

Bei der in Fig. 7 dargestellten fünften Ausführungsvariante der Erfindung ist schließlich zwischen den beiden Teilen 231, 232 des Kraftübertragungsbolzens 417 ein Verriegelungsmechanismus vorgesehen, der mit dem Bezugszeichen 60 versehen ist und der durch Zünden eines Sprengsatzes 61 betätigbar ist. Der Verriegelungsmechanismus 60 besteht dabei im wesentlichen aus einem vorzugsweise senkrecht zur Achse des Kraftübertragungsbolzens 417 angeordneten Verriegelungselement 62, das sich radial durch eine im zweiten Teil 232 ausgebildete Ausnehmung 64 hindurcherstreckt und in eine Radialnut 63 des ersten Teiles 231 hineingreift, der sich somit am Verriegelungselement 62 axial abstützt. Das durch eine Druckfeder 65 vorgespannte Verriegelungselement 62 steht in kraftübertragender Verbindung mit einem pneumatischen Kolben 66, der in einem lediglich angedeuteten, am zweiten Teil 232 angebrachten Gehäuse 67 einen pneumatischen Druckraum 68 begrenzt, in dem durch Zünden des Sprengsatzes 61, beispielsweise ausgelöst durch einen nicht gezeigten Crash-Sensor, eine schlagartige Druckerhöhung erreichbar ist. Durch die Wirkung der entstehenden Druckwelle wird der Kolben 66 gegen die von der Druckfeder 65 aufgebrachten Kraft verschoben, wodurch der erste Teil 231 freigegeben wird und in den zweiten Teil 232 hineingeschoben werden kann. Um eine wirksame Dämpfung des ersten Teiles 231 zu erreichen ist dieser vorzugsweise als ein pneumatischer Kolben gestaltet, der im zweiten Teil 232 eine pneumatische Kammer 69 begrenzt, die über eine am Ende des zweiten Teils 232 eingesetzte Drosselstelle 70 mit der Atmosphäre in Verbindung steht. Um eine Fail-Safe-Funktion, insbesondere bei einer Fehlzündung des Sprengsatzes 61, zu realisieren, ist zwischen den beiden Teilen 231, 232, vorzugsweise in der pneumatischen Kammer 69, eine Druckfeder 71 angeordnet, deren Kraft eine Verformung des Verstärkergehäuses verhindert, die durch Einwirkung von pneumatisch bedingten Kräften verursacht werden könnte, die aus der auf das Verstärkergehäuse wirkenden Druckdifferenz resultieren.

## Patentansprüche

1. Unterdruckbremskraftverstärker für Kraftfahrzeuge mit einem Verstärkergehäuse, das zwei einander gegenüberliegende Gehäusehälften aufweist, mit mindestens einer beweglichen Wand, die den Verstärkergehäuse-Innenraum in zwei Kammern unterteilt, sowie mit zwei Kraftübertragungsbolzen, die sich parallel zur Längsachse des Unterdruckbremskraftverstärkers von einer Gehäusehälfte zu der auf der entgegengesetzten Seite der beweglichen Wand gelegenen Gehäusehälfte erstrecken, gegenüber der beweglichen Wand abgedichtet sind und an deren Enden Befestigungselemente für eine Karosseriewand bzw. einen dem Unterdruckbremskraftverstärker nachgeschalteten Hauptbremszylinder ausgebildet sind, **dadurch gekennzeichnet, daß** die Kraftübertragungsbolzen (17,-) mindestens eine Sollbruchstelle (18,27,28) aufweisen.

2. Unterdruckbremskraftverstärker nach Anspruch 1, **dadurch gekennzeichnet, daß** die Sollbruchstelle durch einen radialen Einschnitt gebildet ist.

3. Unterdruckbremskraftverstärker nach Anspruch 1, **dadurch gekennzeichnet, daß** ein Einschnitt (18,28) im Bereich der Befestigungselemente (25,26) ausgebildet ist.

4. Unterdruckbremskraftverstärker nach Anspruch 1, **dadurch gekennzeichnet, daß** ein Einschnitt (27) im Bereich des Durchtritts der Kraftübertragungsbolzen (18,-) durch die bewegliche Wand (5) außerhalb des Bewegungsbereichs einer die bewegliche Wand (5) gegenüber dem Kraftübertragungsbolzen (17,-) abdichtenden Dichtung (24) ausgebildet ist.

5. Unterdruckbremskraftverstärker nach einem der Ansprüche 1 bis 4, **dadurch gekennzeichnet, daß** der Einschnitt im Querschnitt dreieck-, viereck- oder halbkreisförmig ausgebildet ist.

6. Unterdruckbremskraftverstärker nach einem der Ansprüche 1 bis 5, **dadurch gekennzeichnet, daß** der Einschnitt als eine umlaufende Nut ausgebildet ist.

7. Unterdruckbremskraftverstärker nach einem der Ansprüche 1 bis 6, **dadurch gekennzeichnet, daß** der Kraftübertragungsbolzen (17,-) mit einer gleitfähigen Kunststoffschicht (56) dicht umspritzt ist.

8. Unterdruckbremskraftverstärker nach einem der Ansprüche 1 bis 5, **dadurch gekennzeichnet, daß** der Einschnitt als eine Einfräsung ausgebildet ist, dessen Tiefe größer ist als die Hälfte des Durchmessers des Kraftübertragungsbolzens.

9. Unterdruckbremskraftverstärker nach Anspruch 8, **dadurch gekennzeichnet, daß** im Bereich der Befestigungselemente zwei gleichseitig ausgebildete Einfräsungen vorgesehen sind und daß außerhalb des Betätigungsbereichs einer die bewegliche Wand gegenüber dem Kraftübertragungsbolzen abdichtenden Dichtung eine dritte Einfräsung vorgesehen ist, die gegenüber den gleichseitig angeordneten Ein-fräsungen um 180° versetzt ausgebildet ist.

10. Unterdruckbremskraftverstärker nach Anspruch 8 oder 9, **dadurch gekennzeichnet, daß** der Kraftübertragungsbolzen mit einem Kunststoffrohr ummantelt ist.

11. Unterdruckbremskraftverstärker für Kraftfahrzeuge mit einem Verstärkergehäuse, das zwei einander gegenüberliegende Gehäusehälften aufweist, mit mindestens einer beweglichen Wand, die den Verstärkergehäuse-Innenraum in zwei Kammern unterteilt, sowie mit zwei Kraftübertragungsbolzen, die sich parallel zur Längsachse des Unterdruck-bremskraftverstärkers von einer Gehäusehälfte zu der auf der entgegengesetzten Seite der beweglichen Wand gelegenen Gehäusehälfte erstrecken, gegenüber der beweglichen Wand abgedichtet sind und an deren Enden Befestigungselemente für eine Karosseriewand bzw. einen dem Unterdruckbremskraftverstärker nachgeschalteten Hauptbremszylinder ausgebildet sind, **dadurch gekennzeichnet, daß** die Kraftübertragungsbolzen (117,-) mindestens einen Abschnitt (30) kleineren Querschnitts aufweisen und daß der bzw. die Abschnitte kleineren Querschnitts gegenüber der Achse des Kraftübertragungsbolzens radial versetzt ausgebildet ist bzw. sind.

12. Unterdruckbremskraftverstärker nach Anspruch 11, **dadurch gekennzeichnet, daß** der bzw. die Abschnitte (30) kleineren Querschnitts im Bereich der Befestigungselemente (26,-) ausgebildet ist bzw. sind.

13. Unterdruckbremskraftverstärker nach Anspruch 11, **dadurch gekennzeichnet, daß** der Abschnitt kleineren Querschnitts im Bewegungsbereich der beweglichen Wand ausgebildet ist.

14. Unterdruckbremskraftverstärker nach einem der Ansprüche 1 bis 13, **dadurch gekennzeichnet, daß** die Kraftübertragungsbolzen (17,117) im Bereich der Befestigungselemente (25,26) radiale Erweiterungen (51,52) aufweisen, die sich am Verstärkergehäuse (2) bzw. (20,21) axial abstützen.

15. Unterdruckbremskraftverstärker nach Anspruch 14, **dadurch gekennzeichnet, daß** eine (52) der Erweiterungen mit einem an der ihr zugeordneten Gehäusehälfte (21) ausgebildeten blechlaschenförmigen Flansch (53) zusammenwirkt, um eine Verdrehsicherung des Kraftübertragungsbolzens (17,117) gegenüber dem Verstärkergehäuse (2) bzw. (21) sicherzustellen.

16. Unterdruckbremskraftverstärker für Kraftfahrzeuge mit einem Verstärkergehäuse, das zwei einander gegenüberliegende Gehäusehälften aufweist, mit mindestens einer beweglichen Wand, die den Verstärkergehäuse-Innenraum in zwei Kammern unterteilt, sowie mit zwei Kraftübertragungsbolzen, die sich parallel zur Längsachse des Unterdruckbremskraftverstärkers von einer Gehäusehälfte zu der auf der entgegengesetzten Seite der beweglichen Wand gelegenen Gehäusehälfte erstrecken, gegenüber der beweglichen Wand abgedichtet sind und an deren Enden Befestigungselemente für eine Karosseriewand bzw. einen dem Unterdruckbremskraftverstärker nachgeschalteten Hauptbremszylinder ausgebildet sind, **dadurch gekennzeichnet, daß** die Kraftübertragungsbolzen (217,317,417) zweiteilig ausgebildet sind und aus je zwei teleskopartig ineinander geführten Teilen (31,32,131,132,231,232) bestehen, zwischen denen eine sowohl Druck- als auch Zugkräfte übertragende Verbindung vorgesehen ist, die durch Einwirkung einer einen vorbestimmbaren Wert überschreitenden Druckkraft lösbar ist.

17. Unterdruckbremskraftverstärker nach Anspruch 16, **dadurch gekennzeichnet, daß** die die Druckkräfte übertragende Verbindung durch einen im zweiten Teil (32) angeordneten Sprengring (40) gebildet ist, an dem sich der erste Teil (31) axial abstützt.

18. Unterdruckbremskraftverstärker nach Anspruch 16, **dadurch gekennzeichnet, daß** die die Zugkräfte übertragende Verbindung durch eine am ersten Teil (31) ausgebildete radiale Erweiterung (35) sowie eine am zweiten Teil (32) ausgebildete Stufe (26) gebildet ist.

19. Unterdruckbremskraftverstärker nach Anspruch 16, **dadurch gekennzeichnet, daß** die die Druckkräfte übertragende Verbindung durch mindestens eine im zweiten Teil (32) ausgebildete Eindrückung (44) gebildet ist, an der sich der erste Teil (31) axial abstützt.

20. Unterdruckbremskraftverstärker nach Anspruch 16, **dadurch gekennzeichnet, daß** die die Zugkräfte übertragende Verbindung durch eine am ersten Teil (31) ausgebildete radiale Erweiterung (35) sowie mindestens eine am zweiten Teil (32) ausgebildete Einscherung (43) gebildet ist.

21. Unterdruckbremskraftverstärker nach einem der Ansprüche 16 bis 20, **dadurch gekennzeichnet, daß** der zweite Teil (32) gegenüber dem Verstärkergehäuse (2) bzw. (21) und der erste Teil (31) gegenüber dem zweiten Teil (32) gegen Verdrehen gesichert ist.

22. Unterdruckbremskraftverstärker nach Anspruch 21, **dadurch gekennzeichnet, daß** die Verdrehsicherung zwischen dem zweiten Teil (32) und dem Verstärkergehäuse (2) bzw. (21) mittels einer am zweiten Teil (32) ausgebildeten radialen Erweiterung (54) erfolgt, die mit einem an der dem zweiten Teil (32) zugeordneten Verstärkergehäusehälfte (21) angebrachten blechlaschenförmigen Flansch (55) zusammenwirkt.

23. Unterdruckbremskraftverstärker nach Anspruch 21 oder 22, **dadurch gekennzeichnet, daß** die Verdrehsicherung zwischen dem ersten (31) und dem zweiten Teil (32) mittels eines am in den zweiten Teil (32) hineinragenden Abschnitt des ersten Teils (31) ausgebildeten Vielkantprofils (37) erfolgt.

24. Unterdruckbremskraftverstärker nach Anspruch 21 oder 22, **dadurch gekennzeichnet, daß** die Verdrehsicherung zwischen dem ersten (31) und dem zweiten Teil (32) mittels einer am in den zweiten Teil (32) hineinragenden Abschnitt des ersten Teils (31) ausgebildeten Rändelung (41) erfolgt, die mit einer innerhalb des zweiten Teils (32) ausgebildeten Innenrändelung (42) zusammenwirkt.

25. Unterdruckbremskraftverstärker nach Anspruch 16, **dadurch gekennzeichnet, daß** die die Druckkräfte übertragende Verbindung durch einen Verriegelungsmechanismus (45,60) gebildet ist, der die beiden Teile (131,132,231,232) des Kraftübertragungsbolzens (317,417) in formschlüssigem Eingriff hält und der durch das Steuersignal eines Crashsensors lösbar ist.

26. Unterdruckbremskraftverstärker nach Anspruch 25, **dadurch gekennzeichnet, daß** der Verriegelungsmechanismus (45) elektromechanisch betätigbar ist.

27. Unterdruckbremskraftverstärker nach Anspruch 26, **dadurch gekennzeichnet, daß** der Verriegelungsmechanismus (45) durch eine in den beiden Teilen (131,132) vorgesehene Ausnehmungen (48,57) hineingreifende Sperrklinke (49) gebildet ist, die durch Aktivierung eines Elektromagneten (46,47) außer Eingriff mit den beiden Teilen (131,132) bringbar ist.

28. Unterdruckbremskraftverstärker nach Anspruch 27, **dadurch gekennzeichnet, daß** die Sperrklinke (49) auf dem zweiten Teil (132) radial vorgespannt, im Eingriff mit den beiden Teilen (131,132) durch Zusammenwirken mit dem hülsenförmig gestalteten Anker (47) des Elektromagneten (46,47) so gehalten wird, daß ein Verschieben des Ankers (47) durch Aktivierung der Spule (46) des Elektromagneten (46,47) ein Lösen des formschlüssigen Eingriffs zwischen den beiden Teilen (131,132) bewirkt.

29. Unterdruckbremskraftverstärker nach Anspruch 25, **dadurch gekennzeichnet, daß** der Verriegelungsmechanismus (60) durch Zünden eines Sprengsatzes (61) betätigbar ist.

30. Unterdruckbremskraftverstärker nach Anspruch 25, **dadurch gekennzeichnet, daß** der Verriegelungsmechanismus (60) durch ein Verriegelungselement (62) gebildet ist, an dem der erste Teil (231) des Kraftübertragungsbolzens (417) axial so abgestützt ist, daß ein Entfernen des Verriegelungselementes (62) aus dem Abstützbereich (Radialnut 63) des ersten Teiles (231) ein Lösen der kraftübertragenden Verbindung zwischen den beiden Teilen (231,232) und somit deren Ineinanderschieben ermöglicht.

31. Unterdruckbremskraftverstärker nach Anspruch 30, **dadurch gekennzeichnet, daß** das Verriegelungselement (62) mit einem einen pneumatischen Raum (68) begrenzenden, mittels einer Druckfeder (65) vorgespannten Kolben (66) zusammenwirkt, der durch einen durch Zünden des Sprengsatzes (61) bedingten Druckaufbau im pneumatischen Raum (68) entgegen der von der Druckfeder (65) aufgebrachten Kraft verschiebbar ist.

32. Unterdruckbremskraftverstärker nach einem der vorhergehenden Ansprüche 16 bis 31, **dadurch gekennzeichnet, daß** der erste Teil (231) des Kraftübertragungsbolzens (417) als pneumatischer Kolben ausgebildet ist und im zweiten Teil (232) eine pneumatische Kammer (69) begrenzt, wobei eine Drosselstelle (70) vorgesehen ist, die bei einer Relativbewegung der beiden Teile (231,232) zueinander ein gedämpftes Entweichen der Luft aus der Kammer (69) ermöglicht.

33. Unterdruckbremskraftverstärker nach einem der vorhergehenden Ansprüche 16 bis 32, **dadurch gekennzeichnet, daß** zwischen den beiden Teilen (231,232) des Kraftübertragungsbolzens (417) ein nachgiebiges Element (71) angeordnet ist.

## Claims

1. Vacuum brake force booster for automotive vehicles with a booster housing comprised of two opposite housing halves, with at least one movable wall subdividing the booster housing interior into two chambers, and with two force-transmitting pins which extend in parallel to the longitudinal axis of the vacuum brake force booster from one housing half to the housing half disposed on the opposite side of the movable wall, which are sealed in relation to the movable wall and, at their ends, include attachment elements for an automobile body wall or, respectively, a master brake cylinder connected downstream of the vacuum brake force booster,
**characterized in that** the force-transmitting pins (17,-) include at least one preset breaking point (18, 27, 28).

2. Vacuum brake force booster as claimed in claim 1,
**characterized in that** the preset breaking point is provided by a radial notch.

3. Vacuum brake force booster as claimed in claim 1,
**characterized in that** a notch (18, 28) is designed in the area of the attachment elements (25, 26).

4. Vacuum brake force booster as claimed in claim 1,
**characterized in that** a notch (27) is provided in the area of the passage of the force-transmitting pins (17,-) through the movable wall (5) outside the range of motion of a seal (24) sealing the movable wall (5) in relation to the force-transmitting pin (17,-).

5. Vacuum brake force booster as claimed in any one of claims 1 to 4,
**characterized in that** the notch has a triangular, rectangular, or semicircular cross-sectional configuration.

6. Vacuum brake force booster as claimed in any one of claims 1 to 5,
**characterized in that** the notch is designed as a circumferential groove.

7. Vacuum brake force booster as claimed in any one of claims 1 to 6,
**characterized in that** the force-transmitting pin (17,-) is seal-tightly spray-coated with a gliding plastic layer (56).

8. Vacuum brake force booster as claimed in any one of claims 1 to 5,
**characterized in that** the notch is designed as a milled recess having a depth that is larger than half the diameter of the force-transmitting pin.

9. Vacuum brake force booster as claimed in claim 8,
**characterized in that** two equilateral milled recesses are provided in the area of the attachment elements, and **in that** outside the actuating range of a seal which seals the movable wall in relation to the force-transmitting pin, there is provision of a third milled recess which is offset by 180° with respect to the equilaterally arranged milled recesses.

10. Vacuum brake force booster as claimed in claim 8 or 9,
**characterized in that** the force-transmitting pin is sheathed with a plastic tube.

11. Vacuum brake force booster for automotive vehicles with a booster housing comprised of two opposite housing halves, with at least one movable wall subdividing the booster housing interior into two chambers, and with two force-transmitting pins which extend in parallel to the longitudinal axis of the vacuum brake force booster from one housing half to the housing half disposed on the opposite side of the movable wall, which are sealed in relation to the movable wall and, at their ends, include attachment elements for an automobile body wall or, respectively, a master brake cylinder connected downstream of the vacuum brake force booster,
**characterized in that** the force-transmitting pins (117,-) include at least one portion (30) of small cross-section, and **in that** the portion(s) of small cross-section is/are radially offset to the axis of the force-transmitting pin.

12. Vacuum brake force booster as claimed in claim 11,
**characterized in that** the portion(s) (30) of small cross-section is/are designed in the area of the attachment elements (26,-).

13. Vacuum brake force booster as claimed in claim 11,
**characterized in that** the portion of small cross-section is designed in the range of motion of the movable wall.

14. Vacuum brake force booster as claimed in any one of claims 1 to 13,
**characterized in that** the force-transmitting pins (17, 117) include radial extensions (51, 52) in the area of the attachment elements (25, 26) which are axially supported on the booster housing (2) or (20, 21).

15. Vacuum brake force booster as claimed in claim 14,
**characterized in that** one (52) of the extensions cooperates with a sheet-metal tongue-shaped flange (53) arranged on the housing half (21) associated with the extension in order to ensure a rotation-preventing mechanism of the force-transmitting pin (17, 117) with respect to the booster housing (2) or (21).

16. Vacuum brake force booster for automotive vehicles with a booster housing comprised of two opposite housing halves, with at least one movable wall subdividing the booster housing interior into two chambers, and with two force-transmitting pins which extend in parallel to the longitudinal axis of the vacuum brake force booster from one housing half to the housing half disposed on the opposite side of the movable wall, which are sealed in relation to the movable wall and, at their ends, include attachment elements for an automobile body wall or, respectively, a master brake cylinder connected downstream of the vacuum brake force booster,
**characterized in that** the force-transmitting pins (217, 317, 417) have a bipartite design and are each comprised of two parts (31, 32, 131, 132, 231, 232) which are guided telescopically in one another, between which there is a connection that transmits both pressure forces and tensile forces and is releasable under the action of a pressure force that exceeds a predeterminable value.

17. Vacuum brake force booster as claimed in claim 16,
**characterized in that** the connection which transmits the pressure forces is provided by a circlip (40) arranged in the second part (32) and on which the first part (31) is axially supported.

18. Vacuum brake force booster as claimed in claim 16,
**characterized in that** the connection which transmits the tensile forces is provided by a radial extension (35) designed on the first part (31) and a step (26) formed on the second part (32).

19. Vacuum brake force booster as claimed in claim 16,
**characterized in that** the connection which transmits the pressure forces is provided by at least one indentation (44) which is designed in the second part (32) and on which the first part (31) is axially supported.

20. Vacuum brake force booster as claimed in claim 16,
**characterized in that** the connection which transmits the tensile forces is provided by a radial extension (35) designed on the first part (31) and by at least one mortise (43) provided on the second part (32).

21. Vacuum brake force booster as claimed in any one of claims 16 to 20,
**characterized in that** the second part (32) is secured against rotation with respect to the booster housing (2) or (21) and the first part (31) is secured against rotation with respect to the second part (32).

22. Vacuum brake force booster as claimed in claim 21,
**characterized in that** the rotation-preventing mechanism between the second part (32) and the booster housing (2) or (21) is effected by means of a radial extension (54) designed on the second part (32) and cooperating with a sheet-metal tongue-shaped flange (55) that is fitted to the booster housing half (21) associated with the second part (32).

23. Vacuum brake force booster as claimed in claim 21 or 22,
**characterized in that** the rotation-preventing mechanism between the first (31) and the second part (32) is effected by means of a polyhedral profile (37) designed on the portion of the first part (31) that extends into the second part (32).

24. Vacuum brake force booster as claimed in claim 21 or 22,
**characterized in that** the rotation-preventing mechanism between the first (31) and the second part (32) is effected by means of a milled edge (41) provided on the portion of the first part (31) that projects into the second part (32), the said milled edge (41) cooperating with an inside milled edge (42) designed within the second part (32).

25. Vacuum brake force booster as claimed in claim 16,
**characterized in that** the connection transmitting the pressure forces is formed of a locking mechanism (45, 60) which retains the two parts (131, 132, 231, 232) of the force-transmitting pin (317, 417) in form-locking engagement and which is releasable by the control signal of a crash sensor.

26. Vacuum brake force booster as claimed in claim 25,
**characterized in that** the locking mechanism (45) is electromechanically operable.

27. Vacuum brake force booster as claimed in claim 26,
**characterized in that** the locking mechanism (45) is provided by a lock pawl (49) which is engaged in recesses (48, 57) shaped in the two parts (131, 132), the said lock pawl being movable out of engagement with the two parts (131, 132) by activation of an electromagnet (46, 47).

28. Vacuum brake force booster as claimed in claim 27,
**characterized in that** the lock pawl (49) is retained on the second part (132) in a radially biassed manner, in engagement with the two parts (131, 132), by cooperation with the sleeve-shaped armature (47) of the electromagnet (46,47) in such a fashion that displacement of the armature (47) by activation of the coil (46) of the electromagnet (46, 47) causes release of the form-locking engagement between the two parts (131, 132).

29. Vacuum brake force booster as claimed in claim 25,
**characterized in that** the locking mechanism (60) is actuatable by firing a bursting charge (61).

30. Vacuum brake force booster as claimed in claim 25,
**characterized in that** the locking mechanism (60) is comprised of a locking element (62) on which the first part (231) of the force-transmitting pin (417) is axially supported in such a way that a removal of the locking element (62) from the supporting area (radial groove 63) of the first part (231) permits releasing the force-transmitting connection of the two parts (231, 232) and, thus, their sliding into each other.

31. Vacuum brake force booster as claimed in claim 30,
**characterized in that** the locking element (62) cooperates with a piston (66) that confines a pneumatic chamber (68) and is biassed by means of a compression spring (65), the said piston (66) being displaceable, in opposition to the force generated by the compression spring (65), caused by a pressure build-up in the pneumatic chamber (68) which is due to ignition of the bursting charge (61).

32. Vacuum brake force booster as claimed in any one of the preceding claims 16 to 31,
**characterized in that** the first part (231) of the force-transmitting pin (417) is designed as a pneumatic piston and limits a pneumatic chamber (69) in the second part (232), a restrictor (70) being provided which permits an attenuated escape of the air from the chamber (69) in the event of a relative movement of the two parts (231, 232).

33. Vacuum brake force booster as claimed in any one of the preceding claims 16 to 32,
**characterized in that** a resilient element (71) is interposed between the two parts (231, 232) of the force-transmitting pin (417).

## Revendications

1. Amplificateur de force de freinage à dépression pour véhicule automobile, comprenant un boîtier d'amplificateur, qui comporte deux moitiés de boîtier se faisant face, au moins une cloison mobile, qui divise la cavité du boîtier d'amplificateur en deux chambres, et deux tiges de transmission de force qui s'étendent parallèlement à l'axe longitudinal de l'amplificateur de force de freinage à dépression, d'une moitié de boîtier vers la moitié de boîtier située du côté opposé vis-à-vis de la cloison mobile, dont l'étanchéité est assurée vis-à-vis de la cloison mobile et aux extrémités desquelles sont réalisés des éléments de fixation pour une cloison de carrosserie ou un maître-cylindre de frein monté en aval de l'amplificateur de force de freinage à dépression, **caractérisé en ce que** les tiges de transmission de force (17, -) comportent au moins un emplacement de rupture imposé (18, 27, 28).

2. Amplificateur de force de freinage à dépression suivant la revendication 1, **caractérisé en ce que** l'emplacement de rupture imposé est formé par une entaille radiale.

3. Amplificateur de force de freinage à dépression suivant la revendication 1, **caractérisé en ce qu'**une entaille (18, 28) est réalisée dans la zone des éléments de fixation (25, 26).

4. Amplificateur de force de freinage à dépression suivant la revendication 1, **caractérisé en ce qu'**une entaille (27) est réalisée dans la zone du passage de la tige de transmission de force (18, -) à travers la cloison mobile (5) en dehors de la zone de déplacement d'une garniture d'étanchéité (24) assurant l'étanchéité de la cloison mobile (5) vis-à-vis de la tige de transmission de force (17, -).

5. Amplificateur de force de freinage à dépression suivant l'une des revendications 1 à 4, **caractérisé en ce que** l'entaille est réalisée avec une section transversale triangulaire, carrée ou semi-circulaire.

6. Amplificateur de force de freinage à dépression suivant l'une des revendications 1 à 5, **caractérisé en ce que** l'entaille est réalisée sous forme d'une gorge circonférentielle.

7. Amplificateur de force de freinage à dépression suivant l'une des revendications 1 à 6, **caractérisé en ce que** la tige de transmission de force (17, -) est entourée d'une manière étanche, par pulvérisation, d'une couche de matière plastique (56) apte au glissement.

8. Amplificateur de force de freinage à dépression suivant l'une des revendications 1 à 5, **caractérisé en ce que** l'entaille est réalisée sous forme d'une fraisure dont la profondeur est supérieure à la moitié du diamètre de la tige de transmission de force.

9. Amplificateur de force de freinage à dépression suivant la revendication 8, **caractérisé en ce que** deux fraisures réalisées d'un même côté sont prévues dans la zone des éléments de fixation et **en ce que**, en dehors de la zone d'action d'une garniture d'étanchéité assurant l'étanchéité de la cloison mobile vis-à-vis de la tige de transmission de force, il est prévu une troisième fraisure qui est réalisée en étant décalée de 180° vis-à-vis des fraisures disposées du même côté.

10. Amplificateur de force de freinage à dépression suivant la revendication 8 ou 9, **caractérisé en ce que** la tige de transmission de force est enveloppée par un tube en matière plastique.

11. Amplificateur de force de freinage à dépression pour véhicule automobile, comprenant un boîtier d'amplificateur, qui comporte deux moitiés de boîtier se faisant face, au moins une cloison mobile, qui divise la cavité du boîtier d'amplificateur en deux chambres, et deux tiges de transmission de force qui s'étendent parallèlement à l'axe longitudinal de l'amplificateur de force de freinage à dépression, d'une moitié de boîtier vers la moitié de boîtier située du côté opposé vis-à-vis de la cloison mobile, dont l'étanchéité est assurée vis-à-vis de la cloison mobile et aux extrémités desquelles sont réalisés des éléments de fixation pour une cloison de carrosserie ou un maître-cylindre de frein monté en aval de l'amplificateur de force de freinage à dépression, **caractérisé en ce que** les tiges de transmission de force (117, -) comportent au moins un segment (30) à section transversale plus petite et **en ce que** le ou les segments à section transversale plus petite est ou sont réalisés d'une manière décalée radialement vis-à-vis de l'axe de la tige de transmission de force.

12. Amplificateur de force de freinage à dépression suivant la revendication 11, **caractérisé en ce que** le ou les segments (30) de plus petite section transversale est ou sont réalisés dans la zone des éléments de fixation (26, -).

13. Amplificateur de force de freinage à dépression suivant la revendication 11, **caractérisé en ce que** le segment de plus petite section transversale est réalisé dans la zone de déplacement de la cloison mobile.

14. Amplificateur de force de freinage à dépression suivant l'une des revendications 1 à 13, **caractérisé en ce que** les tiges de transmission de force (17, 117) comportent, dans la zone des éléments de fixation (25, 26), des élargissements radiaux (51, 52) qui prennent appui axialement sur le boîtier d'amplificateur (2) ou (20, 21).

15. Amplificateur de force de freinage à dépression suivant la revendication 14, **caractérisé en ce que** l'un (52) des élargissements coopère avec un rebord (53) sous forme de patte en tôle réalisé sur la moitié de boîtier (21) qui lui est associée, afin d'assurer une immobilisation en rotation de la tige de transmission de force (17, 117) vis-à-vis du boîtier d'amplificateur (2) ou (21).

16. Amplificateur de force de freinage à dépression pour véhicule automobile, comprenant un boîtier d'amplificateur, qui comporte deux moitiés de boîtier se faisant face, au moins une cloison mobile, qui divise la cavité du boîtier d'amplificateur en deux chambres, et deux tiges de transmission de force qui s'étendent parallèlement à l'axe longitudinal de l'amplificateur de force de freinage à dépression, d'une moitié de boîtier vers la moitié de boîtier située du côté opposé vis-à-vis de la cloison mobile, dont l'étanchéité est assurée vis-à-vis de la cloison mobile et aux extrémités desquelles sont réalisés des éléments de fixation pour une cloison de carrosserie ou un maître-cylindre de frein monté en aval de l'amplificateur de force de freinage à dépression, **caractérisé en ce que** les tiges de transmission de force (217, 317, 417) sont réalisées en deux parties et sont constituées chacune de deux parties (31, 32, 131, 132, 231, 232) qui sont guidées l'une dans l'autre d'une manière télescopique et entre lesquelles il est prévu une liaison qui transmet les forces aussi bien de compression que de traction et qui peut être supprimée sous l'action d'une force de compression dépassant une valeur pouvant étre préfixée.

17. Amplificateur de force de freinage à dépression suivant la revendication 16, **caractérisé en ce que** la liaison transmettant les forces de compression est formée par un circlip (40) qui est disposé dans la seconde partie (32) et sur lequel la première partie (31) prend appui axialement.

18. Amplificateur de force de freinage à dépression suivant la revendication 16, **caractérisé en ce que** la liaison transmettant les forces de traction est formée par un élargissement radial (35) réalisé sur la première partie (31) et un épaulement (29) réalisé sur la seconde partie (32).

19. Amplificateur de force de freinage à dépression suivant la revendication 16, **caractérisé en ce que** la liaison transmettant les forces de compression est formée par au moins une partie repoussée (44) qui est réalisée dans la seconde partie (32) et sur laquelle la première partie (31) prend appui axialement.

20. Amplificateur de force de freinage à dépression suivant la revendication 16, **caractérisé en ce que** la liaison transmettant les forces de traction est formée par un élargissement radial (35) réalisé sur la première partie (31) et au moins un crevé (43) réalisé sur la seconde partie (32).

21. Amplificateur de force de freinage à dépression suivant l'une des revendications 16 à 20, **caractérisé en ce que** la seconde partie (32) est immobilisée contre une rotation vis-à-vis du boîtier d'amplificateur (2) ou (21) et la première partie (31), vis-à-vis de la seconde partie (32).

22. Amplificateur de force de freinage à dépression suivant la revendication 21, **caractérisé en ce que** l'immobilisation en rotation entre la seconde partie (32) et le boîtier d'amplificateur (2) ou (21) s'effectue au moyen d'un élargissement radial (54) qui est réalisé sur la seconde partie (32) et qui coopère avec un rebord (55) sous forme de patte en tôle monté sur la moitié de boftier d'amplificateur (21) associée à la seconde partie (32).

23. Amplificateur de force de freinage à dépression suivant la revendication 21 ou 22, **caractérisé en ce que** l'immobilisation en rotation entre la première partie (31) et la seconde partie (32) s'effectue au moyen d'une forme profilée polygonale (37) réalisée sur le segment de la première partie (31) qui pénètre dans la seconde partie (32).

24. Amplificateur de force de freinage à dépression suivant la revendication 21 ou 22, **caractérisé en ce que** l'immobilisation en rotation entre la première partie (31) et la seconde partie (32) s'effectue au moyen d'un moletage (41) qui est réalisé sur le segment de la première partie (31) pénétrant dans la seconde partie (32) et qui coopère avec un moletage intérieur (42) réalisé à l'intérieur de la seconde partie (32).

25. Amplificateur de force de freinage à dépression suivant la revendication 16, **caractérisé en ce que** la liaison transmettant les forces de compression est formée d'un mécanisme de verrouillage (45, 60) qui maintient en prise par complémentarité de formes les deux parties (131, 132, 231, 232) de la tige de transmission de force (317, 417) et qui peut être libéré au moyen du signal de commande d'un capteur de collision.

26. Amplificateur de force de freinage à dépression suivant la revendication 25, **caractérisé en ce que** le mécanisme de verrouillage (45) peut être actionné d'une manière êlectromécanique.

27. Amplificateur de force de freinage à dépression suivant la revendication 26, **caractérisé en ce que** le mécanisme de verrouillage (45) est formé d'un cliquet d'arrêt (49) qui pénètre dans des évidements (48, 57) prévus dans les deux parties (131, 132) et qui peut être mis hors de prise avec les deux parties (131, 132) par activation d'un électro-aimant (46, 47).

28. Amplificateur de force de freinage à dépression suivant la revendication 27, **caractérisé en ce que** le cliquet d'arrêt (49), soumis à une précontrainte radiale sur la deuxième partie (132), est maintenu en prise avec les deux parties (131, 132), par coopération avec l'armature mobile (47) en forme de manchon de l'électro-aimant (46, 47), d'une manière telle qu'un déplacement de l'armature mobile (47) par activation de la bobine (46) de l'électro-aimant (46, 47) pravoque une suppression de la venue en prise par complémentarité de formes entre les deux parties (131, 132).

29. Amplificateur de force de freinage à dépression suivant la revendication 25, **caractérisé en ce que** le mécanisme de verrouillage (60) peut être actionné par l'allumage d'une charge explosive (61).

30. Amplificateur de force de freinage à dépression suivant la revendication 25, **caractérisé en ce que** le mécanisme de verrouillage (60) est formé d'un élément de verrouillage (62) sur lequel la première partie (231) de la tige de transmission de force (417) prend appui axialement d'une manière telle qu'un éloignement de l'élément de verrouillage (62) hors de zone d'appui (gorge radiale 63) de la première partie (231) permet une suppression de la liaison de transmission de force entre les deux parties (231, 232) et donc leur enfoncement l'une dans l'autre.

31. Amplificateur de force de freinage à dépression suivant la revendication 30, **caractérisé en ce que** l'élément de verrouillage (62) coopère avec un piston (66) qui délimite une chambre pneumatique (68) et est soumis à une précontrainte par un ressort de compression (65) et qui peut être déplacé, à l'encontre de la force exercée par le ressort de compression (65), au moyen d'un développement de pression dans la chambre pneumatique (68) qui est provoqué par l'allumage de la charge explosive (61).

32. Amplificateur de force de freinage à dépression suivant l'une des revendications précédentes 16 à 31, **caractérisé en ce que** la première partie (231) de la tige de transmission de force (417) est réalisée sous forme d'un piston pneumatique et délimite une chambre pneumatique (69) dans la seconde partie (232), tandis qu'il est prévu un étranglement (70) qui permet, lors d'un déplacement relatif des deux parties (231, 232) l'une vis-à-vis de l'autre, un échappement amorti de l'air hors de la chambre (69).

33. Amplificateur de force de freinage à dépression suivant l'une des revendications précédentes 16 à 32, **caractérisé en ce qu'**un élément (71) pouvant fléchir est disposé entre les deux parties (231, 232) de la tige de transmission de force (417).
